# EUROPÄISCHE PATENTSCHRIFT

(11) **EP 3 891 410 B1**
(45) Veröffentlichungstag und Bekanntmachung des Hinweises auf die Patenterteilung: **19.04.2023**
(21) Anmeldenummer: 19756170.7
(22) Anmeldetag: 19.08.2019
(51) Int. Cl.: F16D 51/00

(54) **TROMMELBREMSE EINES KRAFTFAHRZEUGS SOWIE KRAFTFAHRZEUG**
DRUM BRAKE FOR VEHICLE AS WELL AS VEHICLE
FREIN A TAMBOUR POUR VÉHICULE ET VÉHICULE

(30) Priorität: 03.12.2018 DE 102018220864
(43) Veröffentlichungstag der Anmeldung: 13.10.2021
(73) Patentinhaber: PSA Automobiles SA, 78300 Poissy (FR)
(72) Erfinder: BAUSCH, Olaf, 65428 Rüsselsheim am Main (DE); EHRLICH, Dirk, 65428 Rüsselsheim am Main (DE)
(74) Vertreter: Spitzfaden, Ralf
(86) Internationale Anmeldenummer: PCT/EP2019/072114
(87) Internationale Veröffentlichungsnummer: WO 2020/114635

(56) Entgegenhaltungen:
- EP-A1- 1 598 302
- JP-A- 2012 107 685
- JP-A- 2012 197 925
- US-A- 3 757 903

## Beschreibung

Vorliegend werden eine Trommelbremse eines Kraftfahrzeugs sowie ein Kraftfahrzeug mit einer Trommelbremse beschrieben.

In Kraftfahrzeugen werden üblicherweise Reibungsbremsen zur Geschwindigkeitsreduktion eingesetzt. Reibungsbremsen weisen in der Regel einen oder mehrere Bremsbeläge und wenigstens einen Reibpartner, z.B. eine Bremsscheibe oder eine Bremstrommel auf, an dem der wenigstens eine Bremsbelag reibt. Bremsbeläge sind Verschleißteile, die bei ihrer Betätigung Bremsenabrieb erzeugen und dabei Bremsstaub freisetzen. Da die Bremsen von Kraftfahrzeugen in der Regel nicht komplett geschlossen sind, wird der Bremsstaub u.a. als Feinstaub in die Umwelt emittiert und führt somit zu Umweltverschmutzung und möglicherweise zu Gesundheitsbelastungen.

Weiterhin sorgt der Bremsstaub für starke Verunreinigungen am Fahrzeug, insbesondere an der Fahrzeugfelge, von wo er sich nur schwer entfernen lässt. Im Falle von Trommelbremsen führt der Bremsstaub auch zu einer Verschmutzung eines Innenraums der Bremstrommel.

Aus der US 2,988,173 B1 ist eine Trommelbremse mit einem Bremsmittel bekannt, dass in einer Bremskammer angeordnet ist. Zum Reinhalten der Trommelbremse ist ein Permanentmagnet vorgesehen, der entweder an der Rückenplatte oder an einem Bremsschuh befestigt ist.

Die JP 2012 197925 A beschreibt eine Bremsvorrichtung einer rotierenden elektrischen Maschine, die einen Rotor und eine Basis umfasst. Auf einer zylindrischen Innenseite der Basis ist ein Stator mit einer darauf gewickelten Spule angeordnet. Der Rotor ist zur zylindrischen Innenseite drehbar angeordnet sind. An einer äußeren Umfangsfläche des Rotors sind Permanentmagnete vorgesehen, die mit einem Luftspalt beanstandet zum Stator zugewandt sind. Am Rotor ist einstückig eine Bremstrommel. An der Basis ist ein Reibelement bewegbar mit einem zweiten Luftspalt zur Bremstrommel angeordnet.

Die US 3 757 903 A beschreibt eine elektromagnetisch aktivierte Servobremse, mit einer Bremstrommel und einer Ankerplatte, wobei Bremstrommel und Ankerplatte ein Gehäuse bilden. In dem Gehäuse ist ein Bremsbelag angeordnet, der mittels eines Aktuators Bremstrommel zur Erzeugung von Reibung gepresst werden kann. Der Aktuator umfasst einen Elektromagneten, der im Gehäuse angeordnet ist.

Die EP 1 598 302 A1 beschreibt eine Aufzugsfördermaschine mit einer Bremsvorrichtung. Ein Gehäuse, eine Rückplatte und Abdeckelemente bilden einen hermetisch abgeschlossenen Raum. An einer Seilscheibe ist Bremstrommel ausgebildet. Ein Permanentmagnet liegt mit einem Luftspalt einem Stator gegenüber und bildet im Zusammenwirken mit dem Stator einen Elektromotor.

Nachteilig hieran ist, dass aus strömungstechnischen Gründen anfallender Bremsstaub aus dem Luftschlitz entweichen kann.

Somit stellt sich die Aufgabe, Trommelbremsen der eingangs genannten Art dahingehend weiterzubilden, dass anfallender Bremsstaub in einer Bremstrommel effektiv gesammelt werden kann.

Die Aufgabe wird gelöst durch eine Trommelbremse gemäß Anspruch 1 sowie ein Kraftfahrzeug mit einer Trommelbremse gemäß dem nebengeordneten Anspruch 12. Weiterführende Ausgestaltungen und Weiterbildungen sind Gegenstand der abhängigen Ansprüche.

Nachfolgend wird eine Trommelbremse eines Kraftfahrzeugs mit einer Bremstrommel und einer Ankerplatte beschrieben, wobei Bremstrommel und Ankerplatte ein Gehäuse bilden, wobei in dem Gehäuse wenigstens ein Bremsbelag angeordnet ist, wobei der Bremsbelag mittels wenigstens eines Aktuators gegen die Bremstrommel zur Erzeugung von Reibung pressbar ist, wobei zwischen Ankerplatte und Bremstrommel wenigstens ein Luftspalt angeordnet ist.

In dem Luftspalt ist wenigstens ein Permanentmagnet angeordnet. Der Bremsbelag enthält Metallpartikel. Der Luftspalt ist umlaufend ausgebildet, so dass durch den Luftspalt Luft ins Innere der Trommelbremse gelangen und entweichen kann. Ferner ist der der Permanentmagnet als Ring ausgebildet, wobei der Luftspalt eine gleichmäßige Belüftung der Trommelbremse erlaubt und magnetisch gegen Entweichen von Bremsstaub geschützt ist.

Dadurch, dass der Permanentmagnet in dem Luftspalt angeordnet ist, kann erreicht werden, dass Bremsstaub, der durch den Luftspalt aus dem Gehäuse befördert werden würde, durch den Magneten eingesammelt wird und vom Emittieren abgehalten werden kann. Durch den Luftspalt wird der Magnet zusätzlich gekühlt, was seine ferromagnetischen Eigenschaften auch bei höheren Temperaturen in der Trommelbremse, zum Beispiel nach einer Bremsung aus höherer Geschwindigkeit, länger beibehält.

Entsprechende Trommelbremsen können an Vorder- und/oder an Hinterachsen vorgesehen sein.

In einer anderen weiterführenden Ausgestaltung kann vorgesehen sein, dass der Permanentmagnet an der Ankerplatte befestigt ist.

Die Ankerplatte wird weniger heiß als die Bremstrommel, weswegen von der Ankerplatte aus weniger Wärmeenergie auf den Magneten übertragen werden kann. Der Permanentmagnet bleibt länger kühl und behält länger seine ferromagnetischen Eigenschaften.

In einer anderen weiterführenden Ausgestaltung kann vorgesehen sein, dass der Permanentmagnet einen sich radial erstreckenden Flansch aufweist.

Hierdurch kann der Magnet eine größere Oberfläche haben und mehr Bremsstaub und metallische Partikel auffangen.

In einer anderen weiterführenden Ausgestaltung kann vorgesehen sein, dass die Bremstrommel am Luftspalt eine axiale Nut aufweist, wobei der Magnet einen Flansch aufweist, der zumindest teilweise in die Nut hineinragt.

Hierdurch kann eine Luftschleuse gebildet werden, die die Strömungsgeschwindigkeit um den Magneten herum reduziert und somit eine höhere Wirksamkeit erreicht werden.

In einer anderen weiterführenden Ausgestaltung kann vorgesehen sein, dass der Permanentmagnet als sich axial erstreckender, flacher Ring ausgestaltet ist.

Ein solcher Magnet lässt sich ohne großen Umkonstruktionsaufwand in bestehende Trommelbremskonstruktionen integrieren.

In einer anderen weiterführenden Ausgestaltung kann vorgesehen sein, dass wenigstens ein im Querschnitt runder Magnetring vorgesehen ist.

Je nach Ausgestaltung können auch zwei oder mehr Magnetringe vorgesehen sein.

Durch die Metallpartikel kann Abrieb des Bremsbelages mithilfe des wenigstens einen Permanentmagnet aufgesammelt werden. Bremsbelagabrieb stellt den größten Anteil an Partikeln dar, die von einer Trommelbremse abgegeben werden.

In einer anderen weiterführenden Ausgestaltung kann vorgesehen sein, dass der Permanentmagnet geklebt, genietet, geschraubt oder geclincht ist.

Insbesondere geschraubte Magneten haben den Vorteil, dass sie leicht ausgetauscht werden können.

In einer anderen weiterführenden Ausgestaltung kann vorgesehen sein, dass der Permanentmagnet abnehmbar ist.

Auf diese Weise kann die Trommelbremse beim Service leichter gewartet und gereinigt werden.

Ein erster unabhängiger Gegenstand betrifft ein Kraftfahrzeug mit einer Trommelbremse der vorgenannten Art.

Eine erste weiterführende Ausgestaltung sieht vor, dass das Kraftfahrzeug einen Elektroantrieb aufweist.

Kraftfahrzeug mit Elektroantrieben brauchen an der Antriebsachse aufgrund der Verzögerungswirkung einer meist vorgesehenen Energierückgewinnungsfunktion kleiner dimensionierte Bremsen als Kraftfahrzeuge mit herkömmlichen Verbrennungsantrieben. Hierfür bieten sich Trommelbremsen an.

Weitere Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen. Dabei zeigen schematisch:
- Fig. 1: ein Kraftfahrzeug mit Trommelbremsen an einer Hinterachse;
- Fig. 2: ein Querschnitt durch eine herkömmliche Trommelbremse nach dem Stand der Technik;
- Fig. 3: ein Querschnitt durch eine Trommelbremse gemäß einer ersten Ausführungsform;
- Fig. 4: ein Querschnitt durch eine Trommelbremse gemäß einer zweiten Ausführungsform;
- Fig. 5: ein Querschnitt durch eine Trommelbremse gemäß einer dritten Ausführungsform, sowie
- Fig. 6: ein Querschnitt durch eine Trommelbremse gemäß einer vierten Ausführungsform.

Gleiche oder gleichwirkende Bauteile werden in den nachfolgenden Figuren zur besseren Lesbarkeit mit gleichen Bezugszeichen versehen.

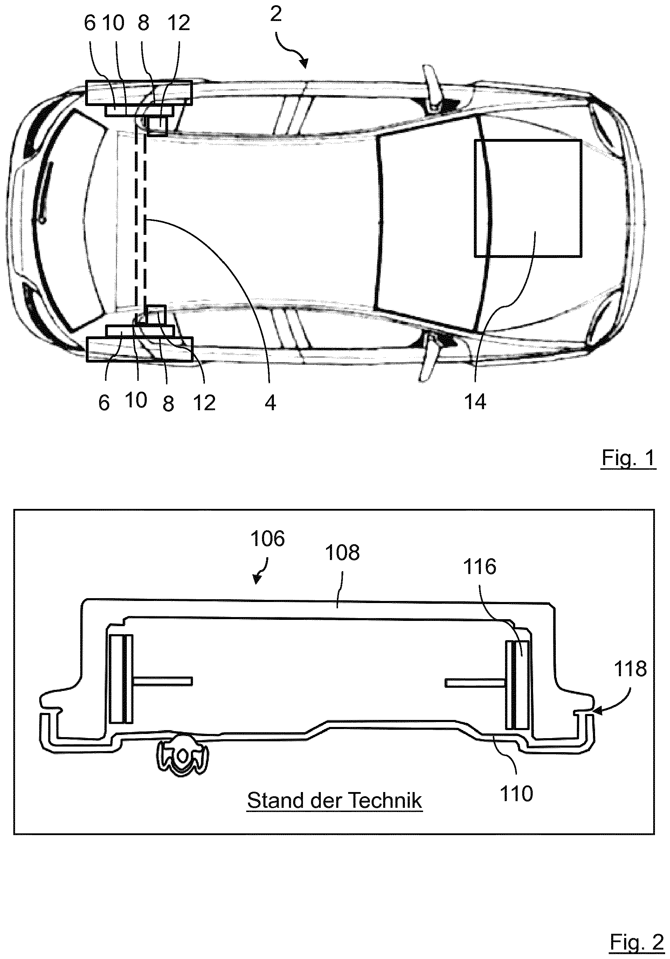

Fig. 1 zeigt eine Draufsicht auf ein Kraftfahrzeug 2.

Das Kraftfahrzeug 2 weist an einer Hinterachse 4 (gestrichelt angedeutet) auf beiden Seiten jeweils Trommelbremsen 6 auf.

Die Trommelbremsen 6 weisen jeweils eine Bremstrommel 8 und eine Ankerplatte 10 auf. Zwischen Bremstrommel 8 und Ankerplatte 10 ist ein in Fig. 1 nicht sichtbarer Luftspalt vorgesehen. Durch den Luftspalt kann Luft ins Innere der Trommelbremse 6 gelangen und entweichen.

Die Trommelbremsen 6 weisen zudem jeweils einen Aktuator 12 auf, mithilfe dessen ein in Fig. 1 nicht sichtbarer Bremsbelag gegen die Bremstrommel 8 pressbar ist.

Das Kraftfahrzeug 2 weist des Weiteren einen Elektroantrieb 14 auf. Der Elektroantrieb 14 wirkt auf die Hinterachse 4.

In alternativen Ausführungsformen können entsprechende Trommelbremsen alternativ an der Vorderachse oder an mehreren Achsen vorgesehen sein.

Fig. 2 zeigt einen Querschnitt durch eine Trommelbremse 106 aus dem Stand der Technik.

Die Trommelbremse 106 weist eine Bremstrommel 108 und eine Ankerplatte 110 auf. Die Bremstrommel 108 dient als Reibpartner für Bremsschuhe 116.

Zwischen Bremstrommel 108 und Ankerplatte 110 ist ein Luftspalt 118 vorgesehen.

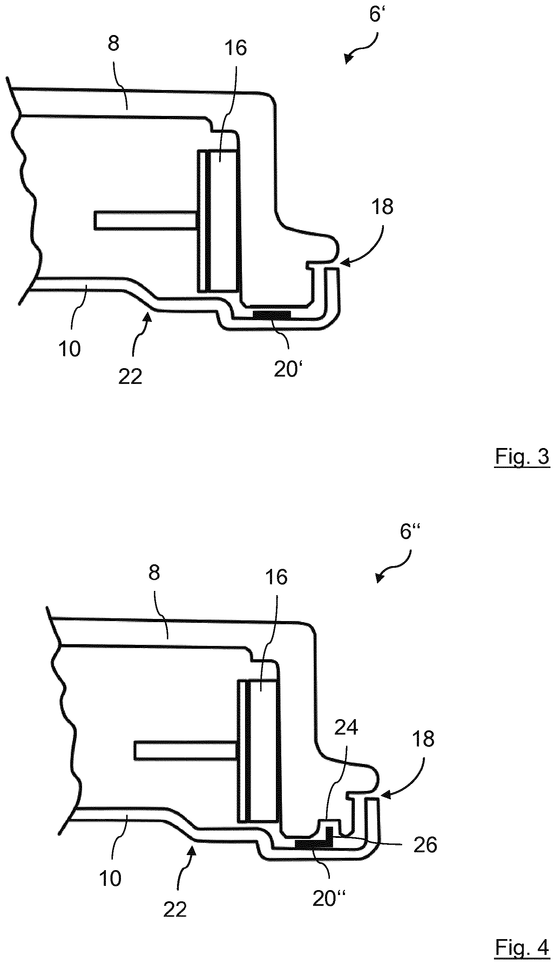

Fig. 3 zeigt einen Querschnitt durch eine Trommelbremse 6' gemäß einer ersten Ausführungsform.

Zwischen der Bremstrommel 8 und der Ankerplatte 10 ist ein Luftspalt 18 vorgesehen.

In dem Luftspalt 18 ist ein ringförmiger Magnet 20' angeordnet. Der ringförmige Magnet 20' ist als sich axial erstreckender flacher hohlzylindrischer Körper ausgebildet, der in radialer Richtung eine sehr geringe Bauhöhe aufweist.

Der Magnet 20` ist ein Permanentmagnet.

Der ringförmige Magnet 20` ist an der Ankerplatte 10 befestigt. Je nach konkreter Ausgestaltung kann die Befestigung des Magneten 20` an der Ankerplatte 10 durch Clinchen, Schrauben, Nieten, oder Kleben vorgenommen werden.

Bremstrommel 8 und Ankerplatte 10 bilden ein Gehäuse 22.

Fig. 4 zeigt einen Querschnitt durch eine Trommelbremse 6" gemäß einer zweiten Ausführungsform.

Im Unterschied zur zuvor beschriebenen Ausführungsform weist die Bremstrommel 108 eine umlaufende Nut 24 auf.

Ein Magnet 20" ist im Querschnitt winkelig ausgebildet und weist einen Flansch 26 auf, der in die Nut 24 hineinragt. Hierdurch wird eine Luftschleuse erzeugt, die eine große Kontaktfläche zum Magneten 20" mit der entweichenden Luft bietet.

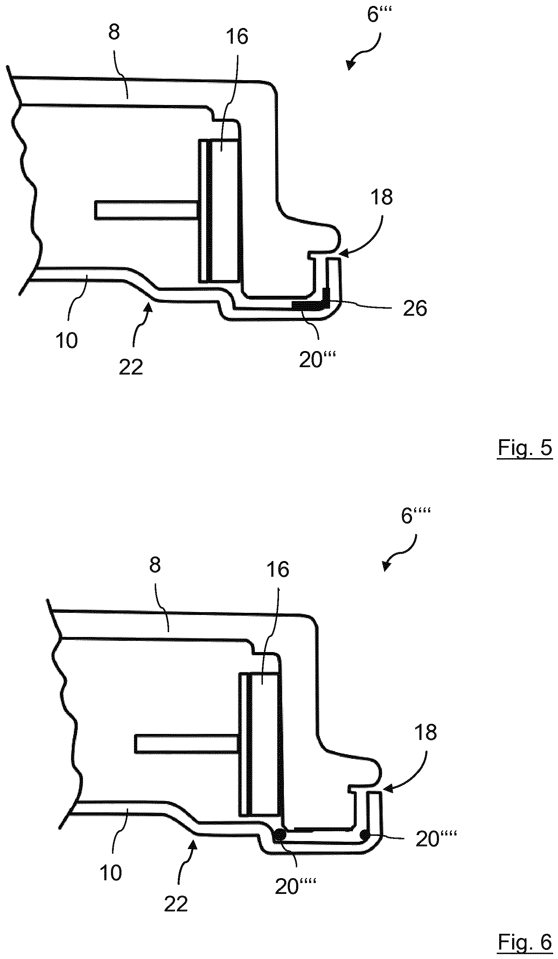

Fig. 5 zeigt einen Querschnitt durch eine Trommelbremse 6‴ gemäß einer dritten Ausführungsform.

Hier ist ein Magnet 20‴ ebenfalls mit Flansch 26 ausgebildet, jedoch in einer natürlichen Biegung des Luftspalts 18 angeordnet, sodass die Bremstrommel 8 keine Nut aufweisen muss.

Fig. 6 zeigt einen Querschnitt durch eine Trommelbremse 6ʺʺ gemäß einer vierten Ausführungsform.

Hier sind zwei jeweils im Querschnitt kreisförmige Magneten 20ʺʺ vorgesehen, die eine Falle für magnetische Partikel darstellen.

Wie in den vorgenannten Figuren eingehender dargestellt wurde, wird durch die Magneten 20', 20", 20‴ oder 20ʺʺ eine Konzentration und Ansammlung von beim Bremsen anfallenden Bremsstaub an den jeweiligen Magneten 20', 20", 20‴ oder 20ʺʺ ermöglicht, sodass weniger Bremssstaub in die Umgebung gelangt.

Der aufgefangene Bremsstaub kann bei einer Wartung der Trommelbremsen 6, 6', 6", 6‴, 6ʺʺ entfernt und entsorgt werden.

Obwohl der Gegenstand im Detail durch Ausführungsbeispiele näher illustriert und erläutert wurde, so ist die Erfindung nicht durch die offenbarten Beispiele eingeschränkt und andere Variationen können vom Fachmann hieraus abgeleitet werden. Es ist daher klar, dass eine Vielzahl von Variationsmöglichkeiten existiert. Es ist ebenfalls klar, dass beispielhaft genannte Ausführungsformen nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

### Bezugszeichenliste

- 2: Kraftfahrzeug
- 4: Hinterachse
- 6, 6', 6", 6‴, 6ʺʺ: Trommelbremse
- 8: Bremstrommel
- 10: Ankerplatte
- 12: Aktuator
- 14: Elektroantrieb
- 16: Bremsschuh
- 18: Luftspalt
- 20', 20", 20‴, 20ʺʺ: Magnet
- 22: Gehäuse
- 24: Nut
- 26: Flansch

- 106: Trommelbremse
- 108: Bremstrommel
- 110: Ankerplatte
- 116: Bremsschuh
- 118: Luftspalt

## Patentansprüche

1. Trommelbremse eines Kraftfahrzeugs (2), mit einer Bremstrommel (8) und einer Ankerplatte (10), wobei Bremstrommel (8) und Ankerplatte (10) ein Gehäuse (22) bilden, wobei in dem Gehäuse (22) wenigstens ein Bremsbelag (16) angeordnet ist, wobei der Bremsbelag (16) mittels wenigstens eines Aktuators (12) gegen die Bremstrommel (8) zur Erzeugung von Reibung pressbar ist, wobei zwischen Ankerplatte (10) und Bremstrommel (8) wenigstens ein Luftspalt (18) angeordnet ist, **dadurch gekennzeichnet, dass** in dem Luftspalt (18) wenigstens ein Permanentmagnet (20', 20", 20‴, 20ʺʺ) angeordnet ist, wobei der Bremsbelag (16) Metallpartikel enthält, wobei der Luftspalt (18) zwischen Ankerplatte (10) und Bremstrommel (8) umlaufend ausgebildet ist, wobei durch den Luftspalt (18) Luft ins Innere der Trommelbremse (6) gelangen und entweichen kann, und wobei der Permanentmagnet (20', 20", 20‴, 20ʺʺ) als Ring ausgebildet ist, so dass der Luftspalt (18) eine gleichmäßige Belüftung der Trommelbremse (6) erlaubt und magnetisch gegen Entweichen von Bremsstaub geschützt ist.

2. Trommelbremse nach einem der vorangegangenen Ansprüche, wobei der Permanentmagnet (20', 20", 20‴, 20ʺʺ) an der Ankerplatte (10) befestigt ist.

3. Trommelbremse nach einem der vorangegangenen Ansprüche, wobei der Permanentmagnet (20", 20‴) einen sich radial erstreckenden Flansch (26) aufweist.

4. Trommelbremse nach einem der vorangegangenen Ansprüche, wobei die Bremstrommel (8) am Luftspalt (18) eine axiale Nut (24) aufweist, wobei der Permanentmagnet (20") einen Flansch (26) aufweist, der zumindest teilweise in die Nut (24) hineinragt.

5. Trommelbremse nach einem der vorangegangenen Ansprüche, wobei der Permanentmagnet (20') als sich axial erstreckender, flacher Ring ausgestaltet ist.

6. Trommelbremse nach einem der vorangegangenen Ansprüche, wobei mindestens ein im Querschnitt runder Magnetring (20ʺʺ) vorgesehen ist.

7. Trommelbremse nach einem der vorangegangenen Ansprüche, wobei der Permanentmagnet (20', 20", 20‴, 20ʺʺ) geklebt, genietet, geschraubt oder geclincht ist.

8. Trommelbremse nach einem der vorangegangenen Ansprüche, wobei der Permanentmagnet (20', 20", 20‴, 20ʺʺ) abnehmbar ist.

9. Kraftfahrzeug mit einer Trommelbremse (6, 6', 6", 6‴, 6ʺʺ) nach einem der vorangegangenen Ansprüche.

10. Kraftfahrzeug nach Anspruch 12, wobei das Kraftfahrzeug (2) einen Elektroantrieb (14) aufweist.

## Claims

1. Drum brake of a motor vehicle (2), with a brake drum (8) and an anchor plate (10), wherein the brake drum (8) and anchor plate (10) form a housing (22), wherein in the housing (22) at least one brake lining ( 16), the brake lining (16) being able to be pressed against the brake drum (8) by means of at least one actuator (12) in order to generate friction, at least one air gap (18) being arranged between the anchor plate (10) and the brake drum (8). , **characterized in that** at least one permanent magnet (20', 20", 20‴, 20ʺʺ) is arranged in the air gap (18), the brake pad (16) containing metal particles, the air gap (18) between the anchor plate (10) and the brake drum (8), air being able to get inside the drum brake (6) and escape through the air gap (18), and the permanent magnet (20', 20", 20‴ , 20ʺʺ) is designed as a ring, so that the air gap (18) allows uniform ventilation of the drum brake (6) and is magnetically protected against the escape of brake dust.

2. Drum brake according to one of the preceding claims, wherein the permanent magnet (20', 20", 20‴, 20ʺʺ) is attached to the anchor plate (10).

3. Drum brake according to one of the preceding claims, wherein the permanent magnet (20", 20‴) has a radially extending flange (26).

4. Drum brake according to one of the preceding claims, wherein the brake drum (8) has an axial groove (24) at the air gap (18), the permanent magnet (20") having a flange (26) which is at least partially in the groove (24) protrudes.

5. Drum brake according to one of the preceding claims, wherein the permanent magnet (20') is designed as an axially extending, flat ring.

6. Drum brake according to one of the preceding claims, wherein at least one magnetic ring (20ʺʺ) with a round cross section is provided.

7. Drum brake according to one of the preceding claims, wherein the permanent magnet (20', 20", 20‴, 20ʺʺ) is glued, riveted, screwed or clinched.

8. Drum brake according to one of the preceding claims, wherein the permanent magnet (20', 20", 20‴, 20ʺʺ) is removable.

9. Motor vehicle with a drum brake (6, 6', 6", 6‴, 6ʺʺ) according to one of the preceding claims.

10. Motor vehicle according to claim 12, wherein the motor vehicle (2) has an electric drive (14).

## Revendications

1. Frein à tambour d'un véhicule automobile (2), avec un tambour de frein (8) et une plaque d'ancrage (10), dans lequel le tambour de frein (8) et la plaque d'ancrage (10) forment un boîtier (22), dans lequel dans le logement (22) d'au moins une garniture de frein (16), la garniture de frein (16) pouvant être plaquée contre le tambour de frein (8) au moyen d'au moins un actionneur (12) afin de générer un frottement, au moins un un espace d'air (18) étant disposé entre la plaque d'ancrage (10) et le tambour de frein (8). , **caractérisé en ce qu'**au moins un aimant permanent (20', 20", 20‴, 20ʺʺ) est agencé dans l'entrefer (18), la plaquette de frein (16) contenant des particules métalliques, l'entrefer (18) entre la plaque d'ancrage (10) et le tambour de frein (8), l'air pouvant pénétrer à l'intérieur du frein à tambour (6) et s'échapper par l'entrefer (18), et l'aimant permanent (20', 20' ', 20‴ , 20ʺʺ) est conçu comme un anneau, de sorte que l'entrefer (18) permet une ventilation uniforme du frein à tambour (6) et est protégé magnétiquement contre la fuite de poussière de frein.

2. Frein à tambour selon l'une des revendications précédentes, dans lequel l'aimant permanent (20', 20", 20‴, 20ʺʺ) est fixé à la plaque d'ancrage (10).

3. Frein à tambour selon l'une des revendications précédentes, dans lequel l'aimant permanent (20", 20‴) présente un rebord s'étendant radialement (26).

4. Frein à tambour selon l'une des revendications précédentes, dans lequel le tambour de frein (8) comporte une rainure axiale (24) au niveau de l'entrefer (18), l'aimant permanent (20") comportant un rebord (26) qui est au moins partiellement dans la gorge (24) fait saillie.

5. Frein à tambour selon l'une des revendications précédentes, dans lequel l'aimant permanent (20') est réalisé sous la forme d'un anneau plat s'étendant axialement.

6. Frein à tambour selon l'une des revendications précédentes, dans lequel au moins un anneau magnétique (20ʺʺ) à section ronde est prévu.

7. Frein à tambour selon l'une des revendications précédentes, dans lequel l'aimant permanent (20', 20", 20‴, 20ʺʺ) est collé, riveté, vissé ou serti.

8. Frein à tambour selon l'une des revendications précédentes, dans lequel l'aimant permanent (20', 20", 20‴, 20ʺʺ) est amovible.

9. Véhicule automobile équipé d'un frein à tambour (6, 6', 6", 6‴, 6ʺʺ) selon l'une des revendications précédentes.

10. Véhicule automobile selon la revendication 12, dans lequel le véhicule automobile (2) comporte une propulsion électrique (14).
